# EUROPÄISCHE PATENTSCHRIFT

(11) **EP 1 573 226 B1**
(45) Veröffentlichungstag und Bekanntmachung des Hinweises auf die Patenterteilung: **21.06.2006**
(21) Anmeldenummer: 03782144.4
(22) Anmeldetag: 08.12.2003
(51) Int. Cl.: F16H 1/28, F16H 57/08, F16H 57/02, F16H 1/46

(54) **UMLAUFGETRIEBE UND MITTEL ZUR MONTAGE DES UMLAUFGETRIEBES AN EINEM GETRIEBETRÄGER**
PLANETARY GEARING AND MEANS FOR MOUNTING THE PLANETARY GEARING ON A GEARING SUPPORT
ENGRENAGE PLANETAIRE ET MOYENS POUR MONTER LEDIT ENGRENAGE PLANETAIRE SUR UN SUPPORT DE TRANSMISSION

(30) Priorität: 16.12.2002 DE 10258796
(43) Veröffentlichungstag der Anmeldung: 14.09.2005
(73) Patentinhaber: SIEMENS AKTIENGESELLSCHAFT, 80333 München (DE)
(72) Erfinder: WAHLER, Torsten, 78073 Bad Dürrheim (DE)
(86) Internationale Anmeldenummer: PCT/DE2003/004033
(87) Internationale Veröffentlichungsnummer: WO 2004/055410

(56) Entgegenhaltungen:
- EP-A- 0 369 597
- DE-B- 1 130 237
- DE-C- 19 729 988
- US-A- 5 662 545
- US-A1- 2001 008 860

## Beschreibung

Die Erfindung betrifft ein Umlaufgetriebe und Mittel zur Montage des Umlaufgetriebes an einem Getriebeträger, wobei das wenigstens einstufig ausgebildete Umlaufgetriebe aus einem auf einer treibenden Welle angeordneten Sonnenrad, mehreren Planetenrädern, einem Planetenradträger und einem konzentrisch zum Sonnenrad angeordneten, ortsfesten Zahnkranz besteht, wobei der ortsfeste Zahnkranz des Umlaufgetriebes einseitig von einer quer zur Zahnkranzachse sich erstreckenden Führungswand begrenzt ist.

Die Verwendung von Umlaufgetrieben ist insbesondere bei Antriebssituationen zweckdienlich, bei denen für die Anordnung eines Getriebes wenig Raum zur Verfügung steht und fallweise eine relativ hohe Leistung zu übertragen ist. Eine solche Situation ist beispielsweise bei Fahrtschreibern gegeben, die als Einbaugeräte mit einem flachen, quaderförmigen Einbaugehäuse konzipiert und mit Chipkarten-Aufnahmeaggregaten ausgerüstet sind, wobei die zur Anwendung kommenden, der fahrerbezogenen Speicherung wenigstens der persönlichen Arbeits- und Ruhezeiten dienenden Chipkarten auf Grund von Fahrer- und Fahrzeugwechsel sowie Verkehrskontrollen relativ häufig gehandhabt werden müssen. Dieser Gebrauch der Chipkarten im Milieu eines Nutzfahrzeuges kann dazu führen, dass die Chipkarten derart verformt sind, dass sie nur mit einem gewissen Kraftaufwand in die Lese/Schreibposition vorgesteckt werden können. Das heißt, dass, um solche Chipkarten selbsttätig wieder in eine Entnahmeposition transportieren zu können, von den hierfür vorgesehen Antriebsmitteln eine erhebliche Leistung aufgebracht und übertragen werden muss.

Außer den bereits genannten Vorzügen ermöglichen Umlaufgetriebe hohe Übersetzungen mit einer relativ kleinen Anzahl an Zahnrädern sowie auf einfache Weise, nämlich durch Anflanschen, getriebliche Erweiterungen. Andererseits erfordern Umlaufgetriebe sowohl eine gehobene Fertigungsqualität und damit einen höheren Fertigungsaufwand als Standgetriebe als auch einen durch den komplexen Aufbau bedingten hohen Montageaufwand. Mit anderen Worten, Umlaufgetriebe sind für eine Großserienfertigung wenig geeignet.

Aus der gattungsgemäßen deutschen Auslegeschrift DE 1 130 237 ist bereits ein Umlaufrädergetriebe der eingangs genannten Art bekannt, welches jedoch für eine automatische Montage, insbesondere wegen des Erfordernisses exakter Winkelpositionierung der einzelnen Zahnräder, weitestgehend ungeeignet ist.

Die Aufgabe der vorliegenden Erfindung bestand somit darin, ein Umlaufgetriebe sowie Mittel zu dessen Montage zu schaffen derart, dass die Serientauglichkeit des Umlaufgetriebes bezüglich Herstellung und Montage erheblich verbessert und eine Eignung für eine automatische Montage gegeben ist.

Die Lösung der gestellten Aufgabe sieht eine Anordnung der eingangs genannten Art mit den Merkmalen des Anspruchs 1 vor. Die Unteransprüche zeigen vorteilhafte Weiterbildungen der Erfindung auf.

Eine Weiterbildung der Erfindung ist **dadurch gekennzeichnet, dass** jedem Planetenrad ein Paar Ausrichtstifte zugeordnet ist, das in jedem Planetenrad eine wenigstens der Anzahl der Ausrichtstiftpaare entsprechende Anzahl von Aufnahmebohrungen vorgesehen ist und dass die Ausrichtstifte derart angeordnet sind, dass die Aufnahmebohrungen in den Planetenrädern rotationssymmetrisch anbringbar sind.

Ein bevorzugtes Ausführungsbeispiel der Erfindung **zeichnet sich dadurch** aus, dass das Umlaufgetriebe zweistufig ausgebildet ist, wobei an dem Planetenradträger der ersten Getriebestufe das Sonnenrad der zweiten Getriebestufe angeformt ist und Durchgangsbohrungen für die Ausrichtstifte vorgesehen sind, dass die Planetenräder der zweiten Getriebestufe mit den Ausrichtstiften zugeordneten Aufnahmebohrungen versehen sind und dass die Ausrichtstifte wenigstens eine die Aufnahme der Planetenräder der zweiten Getriebestufe ermöglichende Länge aufweisen.

Weitere zweckmäßige Ausgestaltungen der Erfindung beschreiben die nicht zitierten Unteransprüche oder gehen aus der Beschreibung der Zeichnungen hervor.

Der entscheidende Vorteil, den die gefundene Lösung bietet, ist insbesondere darin zu sehen, dass das erfindungsgemäße Umlaufgetriebe vorzugsweise auch als zweistufiges Umlaufgetriebe ausbildbar und an dem Getriebeträger in einer Richtung montierbar ist, wobei die Planetenradträger bei Entsprechender vorheriger Ausrichtung sozusagen blind und ohne korrigierende Drehbewegung aufgesetzt werden können und dabei die an den Planetenradträgern angeformten Achsen mit den Lagerbohrungen der zuvor eingelegten Planetenräder passgenau in Eingriff kommen. Das heißt, die gefundene Lösung eignet sich für eine automatische Montage, wobei mit einem sehr geringen Aufwand gewährleistet ist, dass beim Zusammenfügen der Getriebeelemente Zahnkollisionen zwischen den Zähnen der Planetenräder und insbesondere dem ortsfesten Zahnkranz mit Sicherheit vermieden sind. Hilfreich ist in diesem Zusammenhang die Maßnahme, an den Zähnen des Zahnkranzes, die den Ausrichtstiften gegenüber liegen, Fasen anzuformen. An dieser Stelle sei außerdem darauf hingewiesen, dass insbesondere bei einem einstufigen Umlaufgetriebe die Lagerbohrungen der Planetenräder als Aufnahmebohrungen vorgesehen werden können, wobei dann jeweils einer der Ausrichtstifte in geeigneter Weise angeordnet und ausgebildet sein muss.

Hervorgehoben sei ferner, dass bei einer zweistufigen Ausbildung des Umlaufgetriebes, bei der in vorteilhafter Weise dass Sonnenrad der zweiten Getriebestufe unmittelbar an dem Planetenradträger der ersten Getriebestufe angeformt ist, lediglich längere Ausrichtstifte und diesen zugeordnete, in den Planetenrädern und gegebenenfalls in dem Planetenradträger der zweiten Getriebestufe angebrachte Durchgangsbohrungen vorzusehen sind, um die Voraussetzungen für eine schnelle und wenig Sorgfalt erfordernde Montage des relativ komplexen, zweistufigen Umlaufqetriebes zu schaffen. Das heißt, dass auch die Bedingungen für den Einsatz einer einfachen und auf einfache Weise steuerbaren Montagevorrichtung gegeben sind, wobei die zu montierenden Getriebeteile einander in geeigneter Weise ausgerichtet gestapelt sein müssen und lediglich durch Aufstecken montiert werden. Einer derartig einfachen Montagevorrichtung, bei der eine zusätzliche Drehbewegung der Planetenräder bei deren Montage nicht erforderlich ist, liegt die Überlegung zugrunde, dass die Anzahl der Zähne des Zahnkranzes durch die Anzahl der Planetenräder ganzzahlig teilbar sein und die Anzahl der Aufnahmebohrungen in den Planetenrädern der Anzahl der Planetenräder entsprechen sollte. Wichtig ist in diesem Zusammenhang ferner, dass die Aufnahmebohrungen in sämtlichen Planetenrädern rotationssymmetrisch mit jeweils demselben Radius ausgebildet sind. Von wesentlicher Bedeutung für die Funktion des Umlaufgetriebes und dessen Montage ist ferner die vorgesehene, den Zahnkranz einseitig begrenzende Führungswand, die auch als anflanschbarer Deckel ausgebildet sein kann. Sie stellt bei der Montage des Umlaufgetriebes eine Auflage für die Planetenräder dar und ermöglicht ein Minimum an Bauhöhe, indem sie unter Vermeidung zusätzlicher Sicherungsmittel während des Betriebes des Umlaufgetriebes den Planetenrädern, welche in vorteilhafter Weise auch bei einem zweistufigen Umlaufgetriebe gleichgestaltet werden können, als Seitenführung und als axiale Sicherung dient. Außerdem dient nach der Montage des Umlaufgetriebes die Führungswand beim Trennen des Getriebeträgers von einem Ausrichtstifte tragenden Montagewerkzeug bzw. beim Ausstoßen von unmittelbar an der Führungswand angeformten Ausrichtstiften als Abstreifer. Im Übrigen stellt die Führungswand gemäß dem bevorzugten, nachfolgend beschriebenen Ausführungsbeispiel eine Möglichkeit zum Anflanschen eines Stellmotors, dessen auf der Motorwelle befestigtes Ritzel das Sonnenrad des Umlaufgetriebes bildet, dar. Andererseits ist es denkbar, dass eine das Sonnenrad tragende Welle einer Standgetriebestufe in der Führungswand gelagert ist.

Im Folgenden sei die Erfindung anhand der beigefügten Zeichnungen näher erläutert. Es zeigen:
- Figur 1: eine Innenansicht eines Getriebeträgers einer Chipkarten-Transportanordnung nach dem Einbau eines erfindungsgemäßen Umlaufgetriebes,
- Figur 2: eine Teildarstellung des Getriebeträgers gemäß Figur 1 vor dem Einsetzen der Planetenräder und der Planetenradträger des Umlaufgetriebes,
- Figur 3: eine perspektivische Darstellung des Getriebeträgers mit einer teilweisen Explosionsdarstellung des Umlaufgetriebes,
- Figur 4: eine perspektivische Darstellung eines an dem Getriebeträger anflanschbaren Montagewerkzeuges.

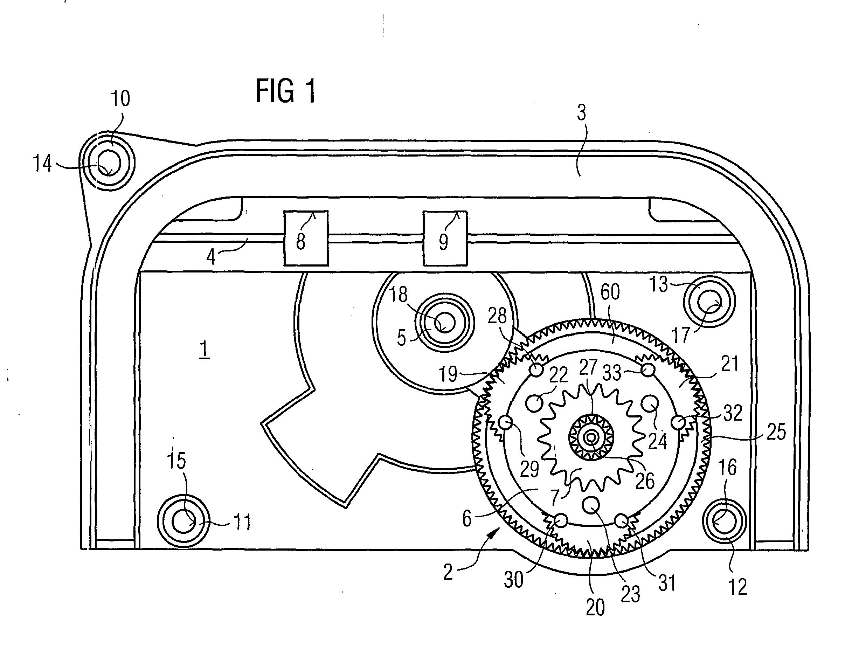

Wie aus der Figur 1 hervorgeht, dient ein Getriebeträger 1 einer als Ausführungsbeispiel gewählten Chipkarten-Transportanordnung der Aufnahme eines vorzugsweise zweistufigen Umlaufgetriebes 2 sowie weiterer Funktionselemente, welche, weil sie nicht erfindungswesentlich sind, der Einfachheit halber nicht dargestellt sind. Es handelt sich dabei zum Beispiel um in einem Kanal 3 des Getriebeträgers 1 gelagerte, als flexible Kraftleiler dienende Kugeln oder Ketten mit oder tonnenförmigen Elementen, welche von einem in den Kanal 3 eingreifenden Schieber in die eine oder andere Richtung verschoben werden können. Letzterer ist in einer in dem Getriebeträger 1 ausgebildeten Nut 4 verschiebbar gelagert und mit einer Verzahnung versehen. In diese greift der eine Zahnkranz eines Zahnradpaares ein, welches auf einem an dem Getriebeträger 1 angeformten Hohlzapfen 5 drehbar gelagert ist. Der andere Zahnkranz des Zahnradpaares steht in getrieblicher Verbindung mit einem an einem Planetenradträger 6 der zweiten Getriebestufe des Umlaufgetriebes 2 unmittelbar angeformten Zahnrad 7. Durchbrüche 8 und 9 dienen dem Durchgreifen von mit dem Schieber zusammenwirkenden Lichtschrankenelementen. Mit 10, 11, 12 und 13 sind weitere, an dem Getriebeträger 1 nach außen weisende Hohlzapfen bezeichnet, die zusammen mit dem Hohlzapfen 5 der Aufnahme von an einem dem Getriebeträger 1 zugeordneten, nicht dargestellten Deckel, ausgebildeten Zapfen vorgesehen sind. Durchgangsbohrungen 14, 15, 16, 17 und 18 und diesen in den Zapfen des Deckels zugeordnete Durchgangsbohrungen dienen der Verschraubung des Deckels, welcher innenseitig geeignete Strukturen zur Führung und axialen Sicherung der in dem Getriebeträger 1 gelagerten Funktionselemente aufweist, mit dem Getriebeträger 1.

Ferner sind in der Figur 1 auf der Gegenseite des Planetenradträgers 6 auf an dem Planetenradträger 6 angeformten Hohlachsen gelagerte Planetenräder 19, 20 und 21 erkennbar. Mit 22, 23 und 24 sind die Bohrungen der Hohlachsen bezeichnet. Die Planetenräder 19, 20, 21 stehen in Eingriff mit einem ortsfesten, am Getriebeträger 1 ausgebildeten Zahnkranz 25. Mit 26 ist das Sonnenrad der zweiten Getriebestufe des Umlaufgetriebes 2, welches durch eine im Planetenradträger vorgesehene Zentrieröffnung 27 sichtbar ist, bezeichnet. 28/29, 30/31 und 32/33 stellen paarweise einander zugeordnete Ausrichtstifte eines gemäß Figur 4 ausgebildeten Montagewerkzeuges 34 dar.

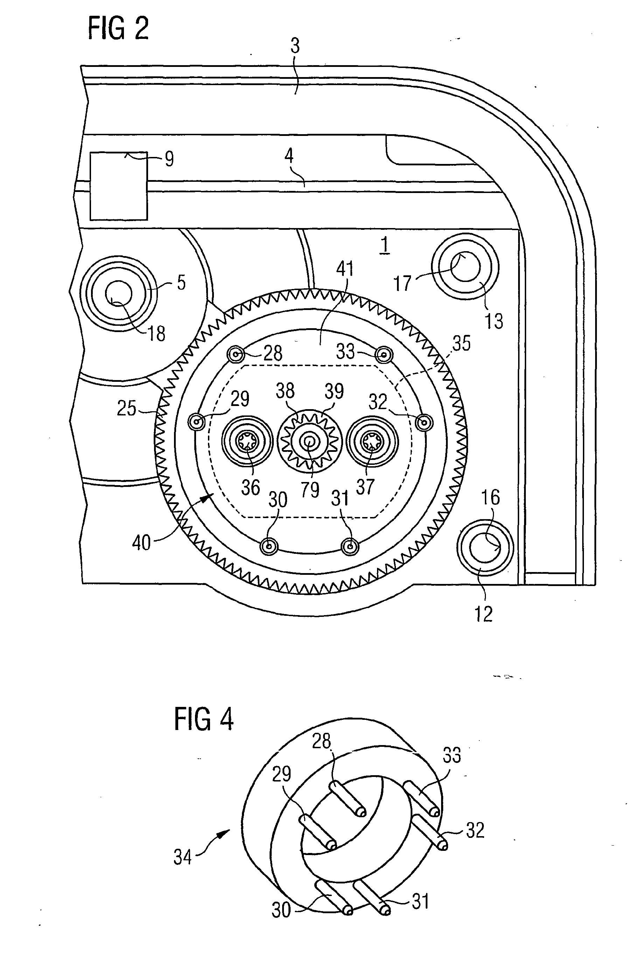

Die gegenüber der Figur 1 vergrößerte Teildarstellung des Getriebeträgers 1, Figur 2, zeigt einen Montagezustand des Umlaufgetriebes 2, bei dem ein Stellmotor 35 der Chipkarten-Transportanordnung an der Außenseite des Getriebeträgers 1 angeflanscht und mittels Schrauben 36 und 37 am Getriebeträger 1 befestigt ist. Das auf der Welle des Stellmotors 35 befestigte Ritzel 38 greift dabei durch eine in dem Getriebeträger 1 vorgesehene Öffnung 39 in den von dem Zahnkranz 25 umgebenen Getrieberaum 40 ein, und zwar mit der Funktion eines Sonnenrades der ersten Getriebestufe des Umlaufgetriebes 2. Ebenso ragen die Ausrichtstifte 28/29, 30/31 und 32/33 des in dem in Figur 2 dargestellten Montagezustand des Umlaufgetriebes 2 bereits angebrachten Montagewerkzeugs 34 in den Getrieberaum 40 hinein. Das heißt, es müssen in dem den Getrieberaum 40 axial abschließenden, als Führungswand 41 bezeichneten Bereich des Getriebeträgers 1 geeignete, den Ausrichtstiften zugeordnete Bohrungen vorgesehen sein. Im Übrigen sei erwähnt, dass die Führungswand 41 nicht zwingend geschlossen ausgebildet sein muss. Aus der Figur 2 ist ferner ersichtlich, dass die den Ausrichtstiften 28/29, 30/31 und 32/33 gegenüberliegenden Zähne des Zahnkranzes 25 mit nicht näher bezeichneten Fasen versehen sind.

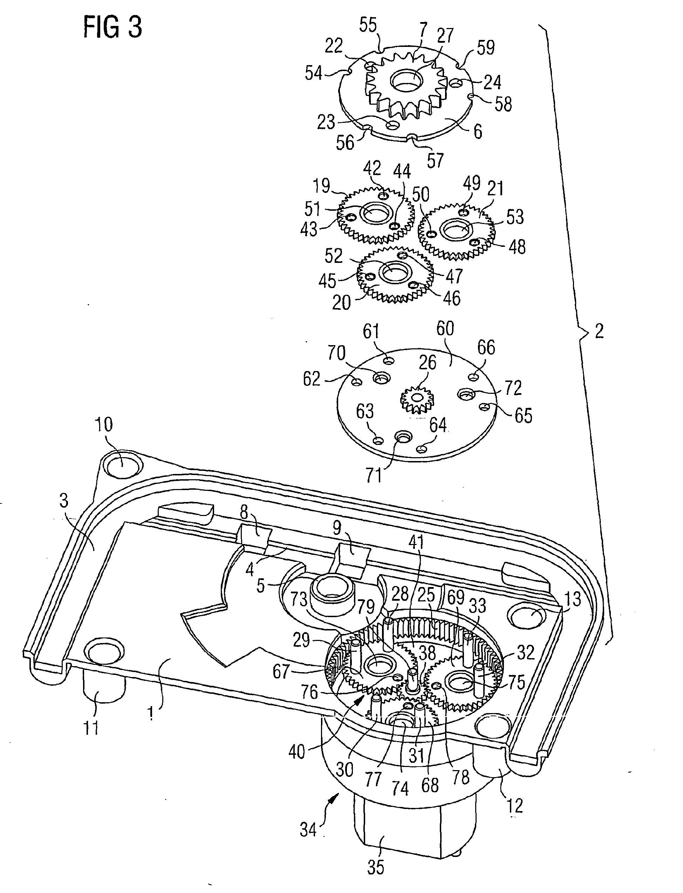

Die Explosionsdarstellung, Figur 3, macht deutlich, dass in den Planetenrädern 19, 20, 21 den Ausrichtstiften 28/29, 30/31, 32/33 zugeordnete Aufnahmebohrungen 42, 43, 44 und 45, 46, 47 sowie 48, 49, 50 zugeordnet sind. Mit 51, 52 und 53 sind die Lagerbohrungen der Planetenräder 19, 20, 21 bezeichnet. Der die Planetenräder 19, 20, 21 lagernde Planetenradträger 6 ist aus Platzgründen im Durchmesser lediglich so groß ausgebildet, dass den Ausrichtstiften 28/29, 30/31, 32/33 noch randliche Aussparungen 54, 55 und 56, 57 sowie 58, 59 zugeordnet werden konnten. Das mit den Planetenrädern 19, 20, 21 in Eingriff stehende Sonnenrad 26 ist unmittelbar an einem Planetenradträger 60 der ersten Getriebestufe des Umlaufgetriebes 2 ausgebildet. Letzterer ist ebenfalls mit den Ausrichtstiften 28/29, 30/31, 32/33 zugeordneten Aufnahmebohrungen 60, 62 und 63, 64 sowie 65, 66 und mit Hohlachsen zur Lagerung der Planetenräder 67, 68 und 69 der ersten Getriebestufe des Umlaufgetriebes 2 versehen. Mit 70, 71 und 72 sind die Bohrungen der nicht sichtbaren Hohlachsen bezeichnet. 73, 74 und 75 stellen die entsprechenden in den Planetenrädern 67, 68, 69 ausgebildeten Lagerbohrungen dar. Von den in den Planetenrädern 67, 68, 69 ausgebildeten, den Ausrichtstiften 28/29, 30/31, 32/33 zugeordneten Aufnahmebohrungen sind lediglich die im dargestellten Montagezustand nicht genutzten Aufnahmebohrungen mit 76, 77 und 78 bezeichnet.

Bei der Montage des Umlaufgetriebes 2 wird, vorzugsweise nachdem der Stellmotor 35 mittels der Schrauben 36, 37 mit dem Getriebeträger 1 fest verbunden ist, das Montagewerkzeug 34 an den Getriebeträger 1 angesetzt oder, insbesondere bei einer automatischen Montage, der Getriebeträger 1 auf eine feststehende Montagevorrichtung aufgesteckt, wobei die Ausrichtstifte 28/29, 30/31, 32/33 in den Getrieberaum 40 eingreifen. Als nächster Montageschritt erfolgt das Einsetzen der Planetenräder 67, 68, 69. Dabei ist es für ein zügiges Zusammenfügen zweckmäßig, wenn bei dem Aufstecken des ersten Planetenrades der Stellmotor 35 derart angesteuert wird, dass die Motorwelle und somit das Ritzel 38 in Schwingung versetzt wird. Die beiden nachfolgenden Planetenräder lassen sich danach problemlos, letztlich auch auf Grund der an dem Zahnkranz 25 vorgesehenen angefasten Verzahnungsbereiche, in die beiden Verzahnungen des arretierten Ritzels 38 und des Zahnkranzes 25 einfügen. Nachfolgend wird der Planetenradträger 60 auf die Ausrichtstifte 28/29, 30/31, 32/33 aufgesteckt und bis zur Auflage auf den Planetenrädern 67, 68, 69 verschoben. Erfindungsgemäß gehen dabei die Hohlachsen des Planetenradträgers 60 ohne zusätzliche Korrekturbewegungen mit den Lagerbohrungen 73, 74, 75 der Planetenräder 67, 68, 69 in Eingriff. Der nächste Montageschritt sieht das Aufstecken der Planetenräder 19, 20, 21 der zweiten Getriebestufe vor. Dabei ermöglicht die definierte Anordnung des an dem Planetenradträger 60 angeformten Sonnenrades 26 ebenfalls ein kollisionsfreies Ineingriffgehen der jeweiligen Verzahnungen. Da alle Planetenräder sowohl diejenigen 67, 68, 69 der ersten als auch diejenigen 19, 20, 21 der zweiten Getriebestufe während der Montage dieselbe Ausrichtung aufweisen, sind keine Drehbewegungen um die Achsen der Planetenräder erforderlich, so dass eine für eine automatische Montage vorgesehene Vorrichtung mit einer relativ einfachen und auf einfache Weise steuerbaren Greifeinheit ausgerüstet sein kann. Mit einem weiteren Montageschritt wird der Planetenradträger 6 sozusagen zwischen die Ausrichtstifte 28/29, 30/31, 32/33 eingesetzt, wobei die an dem Planetenradträger 6 ausgebildeten Hohlachsen in die Lagerbohrungen 51, 52, 53 der Planetenräder 19, 20, 21 eintauchen. Nachfolgend wird das Montagewerkzeug 34 abgezogen bzw. der Getriebeträger 1 einer Montagevorrichtung entnommen, wobei die Führungswand 41 im Bezug auf die Ausrichtstifte 28/29, 30/31, 32/33 als Abstreifer dient. Nach der folgenden Montage der übrigen Funktionselemente der Chipkarten-Transportanordnung wird der Deckel mit dem Getriebeträger 1 verbunden. Dabei dienen dem Planetenradträger eine an dem Deckel angeformte, beispielsweise kreisbogenförmige Rippe als axiale und ein in die Zentrieröffnung 27 eingreifender Zapfen als radiale Führung. Dem gleichen Zweck dient bezüglich des Planetenradträgers 60 eine in den Getrieberaum 40 hineinragende Verlängerung 79 der Welle des Stellmotors 35.

## Patentansprüche

1. Umlaufgetriebe und Mittel zur Montage des Umlaufgetriebes an einem Getriebeträger, wobei das wenigstens einstufig ausgebildete Umlaufgetriebe aus einem auf einer treibenden Welle angeordneten Sonnenrad, mehreren Planetenrädern, einem Planetenradträger und einem konzentrisch zum Sonnenrad angeordneten, ortsfesten zahnkranz besteht, wobei der ortsfeste Zahnkranz des Umlaufgetriebes einseitig von einer quer zur Zahnkranzachse sich erstreckenden Führungswand begrenzt ist, **dadurch gekennzeichnet, dass** die Montagemittel in der Weise eine automatische Montage gestattend ausgebildet sind, dass der Führungswand (41) Ausrichtstifte (28/29, 30/31, 32/33) zugeordnet sind derart, dass die Ausrichtstifte (28/29, 30/31, 32/33) nach dem Zusammenfügen der Getriebeelemente des Umlaufgetriebes (2) entfernbar sind und dass die Planetenräder (19, 20, 21 / 67, 68, 69) mit den Ausrichtstiften (28/29, 30/31, 32/33) entsprechenden Aufnahmebohrungen (42, 43, 44, 45, 46, 47, 48, 49, 50 / 76, 77, 78) versehen sind, wobei die Aufnahmebohrungen (42, 43, 44, 45, 46, 47, 48, 49, 50 / 76, 77, 78) in Bezug auf die Zähne der Planetenräder (19, 20, 21 / 67, 68, 69) derart angebracht sind, dass beim Aufstecken der Planetenräder (19, 20, 21 / 67, 68, 69) auf die Ausrichtstifte (28/29, 30/31, 32/33) die Zähne der Planetenräder (19, 20, 21 / 67, 68, 69) um eine halbe Zahnteilung gegenüber den Zähnen des Zahnkranzes (25) versetzt sind.

2. Umlaufgetriebe und Mittel zur Montage des Umlaufgetriebes nach Anspruch 1, **dadurch gekennzeichnet, dass** wenigstens an den den Ausrichtstiften (28/29, 30/31, 32/33) gegenüberliegenden Zähnen des Zahnkranzes (25) Fasen angeformt sind.

3. Umlaufgetriebe und Mittel zur Montage des Umlaufgetriebes nach Anspruch 1, **dadurch gekennzeichnet, dass** jedem Planetenrad (19, 20, 21 / 67, 68, 69) ein Paar Ausrichtstifte (2B/29, 30/31, 32/33) zugeordnet ist, dass in jedem Planetenrad (19, 20, 21 / 67, 68, 69) eine wenigstens der Anzahl der Ausrichtstiftpaare (28/29, 30/31, 32/33) entsprechende Anzahl von Aufnahmebohrungen (42, 43, 44, 45, 46, 47, 48, 49, 50 / 76, 77, 78) vorgesehen ist und dass die Ausrichtstifte (28/29, 30/31, 32/33) derart angeordnet sind, dass die Aufnahmebohrungen (42, 43, 44, 45, 46, 47, 48, 49, 50 / 76, 77, 78) in den Planetenrädern (19, 20, 21 / 67, 68, 69) rotationssymmetrisch anbringbar sind.

4. Umlaufgetriebe und Mittel zur Montage des Umlaufgetriebes nach Anspruch 1, **dadurch gekennzeichnet, dass** die Ausrichtstifte (28/29, 30/31, 32/33) unmittelbar an der Führungswand (41), und zwar ausbrechbar ausgebildet sind.

5. Umlaufgetriebe und Mittel zur Montage des Umlaufgetriebes nach Anspruch 1, **dadurch gekennzeichnet, dass** die Ausrichtstifte (28/29, 30/31, 32/33) an einem von dem Getriebeträger (1) unabhängigen Montagewerkzeug (34) ausgebildet sind und dass in der Führungswand (41) den Ausrichtstiften (28/29, 30/31; 32/33) zugeordnete Bohrungen angebracht sind.

6. Umlaufgetriebe und Mittel zur Montage des Umlaufgetriebes nach Anspruch 1, **dadurch gekennzeichnet, dass** das Umlaufgetriebe (2) zweistufig ausgebildet ist, wobei an dem Planetenradträger (60) der ersten Getriebestufe das Sonnenrad (26) der zweiten Getriebestufe angeformt ist und Durchgangsbohrungen (61, 62 und 62, 63 sowie 64, 65) für die Ausrichtstifte (28/29, 30/31, 32/33) vorgesehen sind, dass die Planetenräder (19, 20, 21) der zweiten Getriebestufe mit den Ausrichtstiften (28/29, 30/31, 32/33) zugeordneten Aufnahmebohrungen (42, 43, 44, 45, 46, 47, 48, 49, 50) versehen sind und dass die Ausrichtstifte (28/29, 30/31, 32/33) wenigstens eine die Aufnahme der Planetenräder (19, 20, 21) der zweiten Getriebestufe ermöglichende Länge aufweisen.

7. Umlaufgetriebe und Mittel zur Montage des Umlaufgetriebes nach Anspruch 6, **dadurch gekennzeichnet, dass** die Planetenradträger (60, 6) der ersten und der , zweiten Getriebestufe des Umlaufgetriebes (2) scheibenförmig ausgebildet und jeweils mit den Planetenrädern (67, 68, 69 / 19, 20, 21) zugeordneten Achsen versehen sind und dass an dem Planetenradträger (6) der zweiten Getriebestufe ein dem Auskoppeln von Drehwerten aus dem Umlaufgetriebe (2) dienendes Zahnrad (7) unmittelbar angeformt ist.

8. verfahren zur Montage eines Umlaufgetriebes gemäß dem Anspruch 6 oder 7, **dadurch gekennzeichnet, dass** nach dem Befestigen eines Stellmotors (35) an dem Getriebeträger (1) das Montagewerkzeug (34) motorseitig aufgesetzt wird, dass in einer Richtung nachfolgend die Planetenräder (67, 68, 69) der ersten Getriebestufe des Umlaufgetriebes (2) auf die in den Getrieberaum (40) hineinragenden Ausrichtstifte (28/29, 30/31, 32/33) des Montagewerkzeugs (34) aufgesteckt werden, dass danach der Planetenradträger (60) mit den Ausrichtstiften (28/29, 30/31, 32/33) und die an dem Planetenradträger (60) angeformten Hohlachsen mit den Lagerbohrungen (73, 74, 75) der Planetenräder (67, 68, 69) in Eingriff gebracht werden, dass im Folgenden die Planetenräder (19, 20, 21) der zweiten Getriebestufe des Umlaufgetriebes (2) auf die durch den Planetenradträger (60) durchgreifenden Ausrichtstifte (28/29, 30/31, 32/33) aufgesteckt werden und dass nachfolgend der Planetenradträger (6) der zweiten Getriebestufe aufgesetzt wird derart, dass die an dem Planetenradträger (6) angeformten Hohlachsen in die Lagerbohrungen (51, 52, 53) der Planetenräder (19, 20, 21) eingreifen und dass danach das Montagewerkzeug (34) abgezogen wird.

## Claims

1. Planetary gearing and means for mounting the planetary gearing on a gearing support, the planetary gearing of at least single-stage configuration comprising a sun gear disposed on a driving shaft, a plurality of planet gears, a planet carrier, and a fixed gear rim disposed concentric to the sun gear, the fixed gear rim of the planetary gearing being delimited on one side by a guide wall extending transversely to the gear rim axis, **characterized in that** the assembly means are configured in such a manner as to allow an automatic assembly, **in that** to the guide wall (41) alignment pins (28/29, 30/31, 32/33) are assigned in such a way that the alignment pins (28/29, 30/31, 32/33) can be removed once the gear elements of the planetary gearing (2) have been fitted together, and **in that** the planet gears (19, 20, 21 / 67, 68, 69) are provided with receiving bores (42, 43, 44, 45, 46, 47, 48, 49, 50 / 76, 77, 78) corresponding to the alignment pins (28/29, 30/31, 32/33), the receiving bores (42, 43, 44, 45, 46, 47, 48, 49, 50 / 76, 77, 78) being made in relation to the teeth of the planet gears (19, 20, 21 / 67, 68, 69) in such a way that, when the planet gears (19, 20, 21 / 67, 68, 69) are slipped onto the alignment pins (28/29, 30/31, 32/33), the teeth of the planet gears (19, 20, 21 / 67, 68, 69) are offset by half a tooth spacing relative to the teeth of the gear rim (25).

2. Planetary gearing and means for mounting the planetary gearing according to Claim 1, **characterized in that** bevels are formed at least on those teeth of the gear rim (25) which lie opposite the alignment pins (28/29, 30/31, 32/33).

3. Planetary gearing and means for mounting the planetary gearing according to Claim 1, **characterized in that** to each planet gear (19, 20, 21 / 67, 68, 69) there is assigned a pair of alignment pins (28/29, 30/31, 32/33), **in that** in each planet gear (19, 20, 21 / 67, 68, 69) there is provided a number of receiving bores (42, 43, 44, 45, 46, 47, 48, 49, 50 / 76, 77, 78) corresponding at least to the number of alignment pin pairs (28/29, 30/31, 32/33), and **in that** the alignment pins (28/29, 30/31, 32/33) are disposed in such a way that the receiving bores (42, 43, 44, 45, 46, 47, 48, 49, 50 / 76, 77, 78) can be made in rotationally symmetrical arrangement in the planet gears (19, 20, 21 / 67, 68, 69).

4. Planetary gearing and means for mounting the planetary gearing according to Claim 1, **characterized in that** the alignment pins (28/29, 30/31, 32/33) are configured directly on the guide wall (41), to be precise such that they can be broken off.

5. Planetary gearing and means for mounting the planetary gearing according to Claim 1, **characterized in that** the alignment pins (28/29, 30/31, 32/33) are configured on an assembly tool (34) independent from the gearing support (1), and **in that** in the guide wall (41) bores are made which are assigned to the alignment pins (28/29, 30/31, 32/33).

6. Planetary gearing and means for mounting the planetary gearing according to Claim 1, **characterized in that** the planetary gearing (2) is of two-stage configuration, the sun gear (26) of the second gear stage being formed on the planet carrier (60) of the first gear stage and throughbores (61, 62 and 62, 63, plus 64, 65) being provided for the alignment pins (28/29, 30/31, 32/33), **in that** the planet gears (19, 20, 21) of the second gear stage are provided with receiving bores (42, 43, 44, 45, 46, 47, 48, 49, 50) assigned to the alignment pins (28/29, 30/31, 32/33), and **in that** the alignment pins (28/29, 30/31, 32/33) are at least of a length which allows the reception of the planet gears (19, 20, 21) of the second gear stage.

7. Planetary gearing and means for mounting the planetary gearing according to Claim 6, **characterized in that** the planet carriers (60, 6) of the first and of the second gear stage of the planetary gearing (2) are of disc-shaped configuration and are respectively provided with axles assigned to the planet gears (67, 68, 69 / 19, 20, 21), and **in that** formed directly on the planet carrier (6) of the second gear stage there is a gearwheel (7) which serves to extract rotation values from the planetary gearing (2).

8. Method for mounting a planetary gearing according to Claim 6 or 7, **characterized in that**, after a servomotor (35) has been fastened to the gearing support (1), the assembly tool (34) is mounted on the motor side, **in that** in one direction, subsequently, the planet gears (67, 68, 69) of the first gear stage of the planetary gearing (2) are slipped onto the alignment pins (28/29, 30/31, 32/33) of the assembly tool (34), which jut into the gear chamber (40), **in that**, after this, the planet carrier (60) is brought into engagement with the alignment pins (28/29, 30/31, 32/33) and the hollow axles formed on the planet carrier (60) are brought into engagement with the bearing bores (73, 74, 75) of the planet gears (67, 68, 69), **in that**, subsequently, the planet gears (19, 20, 21) of the second gear stage of the planetary gearing (2) are slipped onto the alignment pins (28/29, 30/31, 32/33) reaching through the planet carrier (60), and **in that**, subsequently, the planet carrier (6) of the second gear stage is mounted in such a way that the hollow axles formed on the planet carrier (6) engage in the bearing bores (51, 52, 53) of the planet gears (19, 20, 21), and **in that**, after this, the assembly tool (34) is pulled off.

## Revendications

1. Engrenage planétaire et moyens pour monter ledit engrenage planétaire sur un support de système de transmission, où l'engrenage planétaire, conçu à au moins un étage, se compose d'une roue solaire montée sur un arbre d'entraînement, de plusieurs pignons satellites, d'un support de pignons satellites et d'une couronne dentée fixe montée concentriquement à la roue solaire et où la couronne dentée fixe de l'engrenage planétaire est limitée d'un côté par un panneau de guidage s'étendant perpendiculairement à l'axe de la couronne dentée, **caractérisé en ce que** les moyens de montage sont conçus de telle manière qu'ils autorisent un montage automatisé, que des broches d'alignement (28/29, 30/31, 32/33) correspondent au panneau de guidage (41) de telle manière que les broches d'alignement (28/29, 30/31, 32/33) peuvent être enlevées après l'assemblage des éléments de l'engrenage planétaire (2) et que les pignons satellites (19, 20, 21 / 67, 68, 69) sont dotés d'alésages de positionnement (42, 43, 44, 45, 46, 47, 48, 49, 50 / 76, 77, 78) correspondant aux broches d'alignement (28/29, 30/31, 32/33), les alésages de positionnement (42, 43, 44, 45, 46, 47, 48, 49, 50 / 76, 77, 78) étant, par rapport aux dents des pignons satellites (19, 20, 21 / 67, 68, 69) ménagés de telle manière que, lors de l'enfichage des pignons satellites (19, 20, 21 / 67, 68, 69) sur les broches d'alignement (28/29, 30/31, 32/33), les dents des pignons satellites (19, 20, 21 / 67, 68, 69) sont décalées d'un demi pas par rapport aux dents de la couronne dentée (25).

2. Engrenage planétaire et moyens pour monter ledit engrenage planétaire selon la revendication 1, **c a r a c t é r i s é s en ce que** des chanfreins sont ménagés au moins sur les dents de la couronne dentée (25) se trouvant en face des broches d'alignement (28/29, 30/31, 32/33).

3. Engrenage planétaire et moyens pour monter ledit engrenage planétaire selon la revendication 1, **caractérisés en ce que** une paire de broches d'alignement (28/29, 30/31, 32/33) correspond à chaque pignon satellite (19, 20, 21 / 67, 68, 69), qu'il est prévu, dans chaque pignon satellite (19, 20, 21 / 67, 68, 69), un nombre d'alésages de positionnement (42, 43, 44, 45, 46, 47, 48, 49, 50 / 76, 77, 78) correspondant au moins au nombre de paires de broches d'alignement (28/29, 30/31, 32/33) et que les broches d'alignement (28/29, 30/31, 32/33) sont disposées de telle manière que les alésages de positionnement (42, 43, 44, 45, 46, 47, 48, 49, 50 / 76, 77, 78) peuvent être ménagés en symétrie de révolution dans les pignons satellites (19, 20, 21 / 67, 68, 69).

4. Engrenage planétaire et moyens pour monter ledit engrenage planétaire selon la revendication 1, **caractérisés en ce que** les broches d'alignement (28/29, 30/31, 32/33) sont formées directement sur le panneau de guidage (41) et, ceci, de telle manière qu'elles peuvent être rompues.

5. Engrenage planétaire et moyens pour monter ledit engrenage planétaire selon la revendication 1, **caractérisés en ce que** les broches d'alignement (28/29, 30/31, 32/33) sont formées sur un outil de montage (34) indépendant du support (1) de système de transmission et que des alésages correspondant aux broches d'alignement (28/29, 30/31, 32/33) sont ménagés dans le panneau de guidage (41).

6. Engrenage planétaire et moyens pour monter ledit engrenage planétaire selon la revendication 1, **caractérisés en ce que** l'engrenage planétaire (2) est à deux étages, la roue solaire (26) du deuxième étage de l'engrenage étant ménagée sur le support (60) de pignons satellites du premier étage de l'engrenage et qu'il est prévu des alésages traversants (61, 62 et 62, 63, ainsi que 64, 65) pour les broches d'alignement (28/29, 30/31, 32/33), que les pignons satellites (19, 20, 21) du deuxième étage de l'engrenage sont dotés d'alésages de positionnement (42, 43, 44, 45, 46, 47, 48, 49, 50) correspondant aux broches d'alignement (28/29, 30/31, 32/33) et que les broches d'alignement (28/29, 30/31, 32/33) ont une longueur permettant de supporter les pignons satellites (19, 20, 21) du deuxième étage de l'engrenage.

7. Engrenage planétaire et moyens pour monter ledit engrenage planétaire selon la revendication 6, **caractérisés en ce que** les supports (60, 6) des pignons satellites du premier et du deuxième étage de l'engrenage planétaire (2) ont la forme d'un disque et sont chacun dotés d'axes correspondant aux pignons satellites (67, 68, 69 / 19, 20, 21) et qu'une roue dentée (7) servant à la sortie de valeurs relatives à l'angle de rotation de l'engrenage planétaire (2) est ménagée directement sur le support (6) de pignons satellites du deuxième étage de l'engrenage.

8. Procédé pour le montage d'un engrenage planétaire conforme à la revendication 6 ou 7, **caractérisé en ce que**, après la fixation d'un servomoteur (35) sur le support (1) du système de transmission, l'outil de montage (34) est mis en place du côté moteur, que, ensuite, les pignons satellites (67, 68, 69) du premier étage de l'engrenage planétaire (2) sont enfichés dans une direction sur les broches d'alignement (28/29, 30/31, 32/33) de l'outil de montage (34), qui font saillie dans la chambre (40) de l'engrenage, que, ensuite, le support (60) des pignons satellites avec les broches d'alignement (28/29, 30/31, 32/33) et les axes creux, ménagés sur le support (60) de pignons satellites avec les alésages de paliers (73, 74, 75) des pignons satellites (67, 68, 69), sont mis en prise, que, dans ce qui suit, les pignons satellites (19, 20, 21) du deuxième étage de l'engrenage planétaire (2) sont enfichés sur les broches d'alignement (28/29, 30/31, 32/33) qui traversent le support (60) de pignons satellites et que, ensuite, le support (6) de pignons satellites du deuxième étage de l'engrenage est mis en place de telle manière que les axes creux ménagés sur le support (6) de pignons satellites s'introduisent dans les alésages de paliers (51, 52, 53) des pignons satellites (19, 20, 21) et que, ensuite, l'outil de montage (34) est retiré.
